# EUROPEAN PATENT APPLICATION

(11) **EP 1 878 943 A2**
(43) Date of publication of application: **16.01.2008**
(21) Application number: 07011451.7
(22) Date of filing: 12.06.2007
(51) Int. Cl.: F16G 13/06

(54) **Chain for use in automobile engine**

(30) Priority: 11.07.2006 JP 2006190917
(71) Applicant: Tsubakimoto Chain Co., Kita-ku Osaka 530-0005 (JP)
(72) Inventor: Nagao, Kenich, Kita-ku, Osaka 530-0005 (JP); Tohara, Takashi, Kita-ku, Osaka 530-0005 (JP); Miyazawa, Toshihiko, Kita-ku, Osaka 530-0005 (JP)
(74) Representative: Ullrich & Naumann

(57) **Abstract**

Connecting pins (15) in a roller chain (10) are chromized by a diffusion penetration treatment, that results in inner and outer chromium carbide layers on the steel base material. The inner layer contains Cr₇C₃, and the outermost layer, which is thinner than the inner layer, contains Cr₂₃C₆. The surface roughness of the outer layer is reduced by barrel polishing, without removal of all of the Cr₂₃C₆-containing layer.

## Description

### FIELD OF THE INVENTION

This invention relates to power transmitting chains for use in automobile engines, and to improvements particularly useful in timing chains, that is, chains used to deliver rotating power from an engine crankshaft to one or more valve-operating camshafts.

### BACKGROUND OF THE INVENTION

Metal roller chains, and rollerless chains known as bushing chains, have come into increasing use as power transmitting media for automobile engines, and have displaced toothed belts and V-belts because of the demand for reliable high speed operation, greater endurance, and increased capacity to withstand mechanical loads, and also because roller chains and bushing chains require less maintenance, and afford greater freedom in the design of the engine layout.

A typical metal chain for use in an automobile engine, is composed of alternating bushing links and pin links. In each bushing link, one end of each bushing of a pair of cylindrical bushings is press-fit into one of two bushing holes in an inner plate, and the opposite ends of the two bushings are similarly press-fit into bushing holes in an opposite inner plate. In the same way, in each pin link, one end of each pin of a pair of pins is press-fit into one of two pin holes in an outer plate, and the opposite ends of the two pins are press-fit into pin holes in an opposite outer plate. The inner plates of the bushing links are interleaved with the outer plates of the pin links, and each pin of a pin link extends loosely though a bushing of an adjacent bushing link so that a flexible chain is formed. In the case of a bushing chain, the bushings themselves engage driving and driven sprockets. In the case of a roller chain, a hollow, cylindrical roller, surrounding each bushing, and rotatable thereon, engages the sprockets.

In conventional chains, the pins are typically subjected to heat treatment, including quench hardening and tempering, and to carburizing and nitriding treatments or the like. In some cases, the surfaces of the pin have been subjected to surface hardening by boronizing or chromizing treatments and the like. The pins have also been plated with nickel or the like. Furthermore, chain bushings, formed of alloy steel, a sintered alloy, or the like, have been subjected to carburizing or nitriding for the purpose of improving their hardness and thereby decreasing the wear elongation of the chain. Such treatments are mentioned in various patents, for example, United States patent 4,995,852.

When a conventional timing chain is used in highly deteriorated lubricating oil with a high degree of oxidation, it is subjected to the influences of oxidation or corrosion, and can wear excessively due to adhesion between the pins and the bushings, and as a result, the useful life of the chain is shortened. One of the inventors of the present invention had already developed a chain in which the material of the bushing was subjected to carburizing treatment, and a vanadium carbide (VC) layer was formed on the surfaces of the pins. This development is described in United States Patent Publication 2005/0090348.

A silent chain has also been proposed in which, after a connecting pin is subjected to vanadium carbide (VC) treatment, the outermost surface layer of the base material is fully removed by barrel polishing treatment so that a vanadium carbide (VC) layer, with impurities removed and containing vanadium carbide except for V₈C₇, is formed on the outermost layer of the base material. This chain is described in Japanese Laid-Open Patent Publication No. 2005-290435.

Chains in which the pins are subjected to surface treatment by boronizing or chromizing, and plated with nickel or the like, and in which the bushings are formed of an alloy steel or sintered alloy subjected to carburizing or nitriding, have been used in motorcycles and industrial equipment. However, it has been reported that, when such chains are used as timing chains in automobile engines, there have been instances in which the expected endurance is not achieved, and abnormal wear elongation occurs.

In a chain in which the material of the bushing is subjected to carburizing treatment and a vanadium carbide layer is formed on the surfaces of the connecting pins, as in U.S. Patent Application Publication 2005/0090348, wear due to adhesion of the bushing to the pin is suppressed. However, because heat treatment, and treatment to form the vanadium carbide layer are required, the manufacturing cost of such a chain is high. Moreover, such a chain requires a constant and reliable supply of lubricating oil, and therefore, problems can be encountered in the maintenance of such a chain.

When the surface treatment described in Japanese Laid-Open Patent Publication No. 2005-290435 is adapted for use in a roller chain or bushing chain for an automobile engine, the inner surface of the bushings appear to become corroded by highly oxidized lubricating oil, and wear of mutually contacting surfaces of the bushings and the connecting pins is promoted, especially under high mechanical loads. Moreover, since the outermost surface layer of the pin is fully removed by barrel polishing, when the treatment is adapted to a roller chain or a bushing chain, powder generated by wear at the mutually contacting surfaces of the pins and the bushings remains as inclusions between the pins and the bushings, These inclusions promote abrasive wear, which causes abnormal wear of the mutually sliding surfaces of the pin and the bushing. The results achieved by this adaptation were no better than those achieved in the case where barrel polishing treatment was applied to a silent chain.

Where the pins and the bushings of a bushing chain or a roller chain are composed of materials having a high affinity for each other, for example in the case where the pins and bushings are composed of the same element, the pins are liable to adhere to the bushings, and the adhesion of the pins to the bushings impairs smooth flexing and sliding of the chain.

Accordingly, an object of the invention is to solve the above-mentioned problems of a conventional chain. In particular, the invention provides a chain for use in an automobile engine, in which, even if the chain is lubricated by a deteriorated lubricating oil having high degree of oxidation, abnormal wear elongation due to abrasive wear of the mutually sliding surfaces the pins and bushings is avoided. Morever, even if the pins and the bushings are composed of materials having a high affinity for each other, e.g., if the pins and bushings are composed of identical elements, they are not liable to adhere to each other, and wear due to "adhesion" is suppressed, so that smooth flexing and sliding of the chain can take place over a long period of time.

Another object of the invention is to provide a chain for use in an automobile engine which can maintain superior lubricity over a long period of time.

Still another object of the invention is to provide a chain for use in an automobile engine in which the initial wear of a bushing, sometimes referred to as the bushing's "attackability," is reduced. A consequence of the reduction in the attackability of the bushing is that the shock resistance of the chain is improved.

### SUMMARY OF THE INVENTION

The chain according to the invention comprises pairs of inner plates and pairs of outer plates in alternating, overlapping relationship along the length of the chain. A pair of bushings is provided for each pair of inner plates, and the ends of the bushings are press-fit into bushing holes in the inner plates. A pair of pins is provided for each pair of outer plates, and the ends of the pins are press-fit into pin holes in the outer plates.
Each pin extends through, and fits loosely in, one of the bushings. The base material of each of the pins is steel, and an outer portion of each pin, extending from the base material to an outer surface thereof, contains chromium carbide and is formed by diffusion penetration. The outer portion is composed of an inner layer containing Cr₇C₃, and an outermost layer containing Cr₂₃C₆. Preferably, the inner layer, which contains Cr₇C₃, is thicker than the outermost layer, which contains Cr₂₃C₆.

The Cr₂₃C₆ - containing outermost layer of each pin, can be subjected to treatment, preferably barrel polishing, to reduce the surface roughness of the pin.

Because the outer portion of the pin is composed of an inner layer containing Cr₇C₃, and an outermost layer containing Cr₂₃C₆, the two layers have different qualities. The inner layer, which contains Cr₇C₃, is characterized by a high degree of hardness, while the outermost layer, which contains Cr₂₃C₆, is characterized by superior wear resistance, porosity, heat resistance and lubricity. Thus, even if the chain is used with highly deteriorated lubricating oil, having a high degree of oxidation, the chain will not exhibit abnormal wear elongation, and, at the same time, the chain will have excellent wear resistance, heat resistance, and lubricity.

When the outermost layer of the pin, i.e., the layer containing Cr₂₃C₆, is subjected to treatment to reduce its surface roughness, the attackability of the bushing, and the initial wear of the pin itself, are reduced. Thus, both the initial wear and the steady state wear of the chain are reduced. Furthermore, the outermost layer of the pin has a Vickers hardness of about 1800 HV or more, and is porous.

Various finishing processes are available for reducing the surface roughness of the pin. Among the options is "superfinishing," which is a process used to finish inner and outer surfaces of a workpiece. The superfinishing process comprising pressing a grindstone into contact with a wide surface area of a rolling workpiece, using a spring, and imparting a minute, low-frequency, vibration in the direction of the axis of rotation of the rolling workpiece. Another option is chemical polishing, in which a workpiece is immersed in a processing solution to make the surface of the work smooth by a chemical reaction, thereby imparting brilliance to the work. Another option is electrolytic polishing, in which the workpiece is immersed in an electrolytic solution and passing an electric current between the workpiece, which is connected to the positive side of the electric current supply and becomes an anode, and another electrode which is immersed in the electrolytic solution and connected to the negative side of the electric current supply so that it becomes a cathode. The surface of the workpiece is eluted into the electrolytic solution. The best option, however, is barrel polishing. When barrel polishing is used as the treatment to reduce the surface roughness of the pin, greater friction is generated between the pin being worked and the abrasive material used in the finishing process. Barrel polishing produces results superior to those produced by superfinishing, chemical polishing, and electrolytic polishing, and makes it possible to carry out finishing of a small part such as a pin efficiently.

When the inner chromium carbide layer on the pin, i.e., the layer containing Cr₇C₃, is thicker than an outer chromium carbide layer, containing Cr₂₃C₆, the attackability of the associated bushing is reduced. Thus, the shock resistance of the chain is improved, and abrasion loss of the bushing can be suppressed.

These effects provide a chain for use in an automobile engine which exhibits excellent endurance, wear resistance and shock resistance. In addition, wear due to adhesion is suppressed, and therefore, the chain flexes and slides smoothly over a long period of time. These effects also are environmentally beneficial in that they can effectively extend the lifetime of the lubricating oil used with the chain.

### BRIEF DESCRIPTION OF THE DRAWINGS

FIG. 1 is a partially cut away perspective view showing a part of a roller chain according to the invention;

FIG. 2 is a graph showing the results of elongation tests in deteriorated lubricating oil for roller chains according to the invention and a conventional chain; and

FIG. 3 is a microphotograph showing the cross-sectional structure of a pin in the roller chain according to the invention.

### DETAILED DESCRIPTION OF THE PREFERRED EMBODIMENTS

The invention will be described with reference to a roller chain. However, it should be understood that the beneficial effects of the invention are also applicable to a bushing chain.

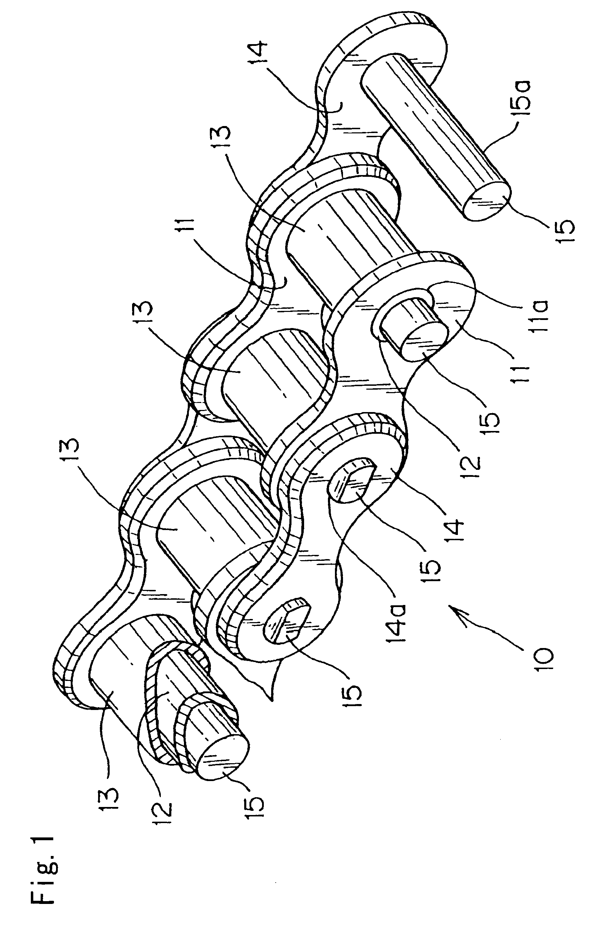

The roller chain 10, shown in FIG. 1, is composed of inner plates 11, outer plates 14, bushings 13, pins 15 and rollers 13. Both ends of each bushing 12 are press-fit into bushing holes 11a of a pair of opposed inner plates 11 of the chain. Similarly, both ends of a pin 15, which fits loosely in a bushing 12, are press-fit into pin holes 14a of a pair of opposed outer plates 14, which are disposed on the outer sides of the inner plates 11 in overlapping relationship. Rollers 13 are rotatably mounted on the bushings 12. When used as an engine timing chain, the chain is formed into an endless loop consisting of alternating pin links and bushing links, each pin link being composed of two outer plates 14 and two pins 15, and each bushing link being composed of two inner plates 11, two bushings 12 and two rollers 13.

The bushing 12 is composed of alloy steel. The base material of the pin 15 can be high carbon steel or low carbon steel. In the case of low carbon steel, a high carbon surface layer is formed on the surface 15a of the pin 15. The high carbon surface layer can be formed by a wide variety of known methods. However, the formation of the high carbon surface layer is preferably carried out by a carburizing treatment, in which the pin 15 is heated to approximately 900°C to 950°C in a carburizing agent to diffuse carbon into in the surface of the pin. If high carbon steel is used as the base material of the pin 15, the carburizing treatment is not needed.

A chromizing layer, that is, a diffused chromium layer is formed on a surface of the pin 15 by a diffusion penetration treatment known as a "powder pack" treatment. In this treatment, the periphery of the pin 15 is filled with a chromium powder or a chromium alloy powder, and is heat-treated at a temperature in the range from 900°C to 1200°C for 5 to 25 hours. When this powder pack method is carried out, an anti-sintering agent such as alumina or the like, and a reaction promoting agent such as ammonium chloride or the like, are added in appropriate amounts.

Another known option for forming the chromizing layer is to utilize a molten salt method, also known as the "Toyota Diffusion" method, in which the pin is treated in molten salt. Still another known option for forming the chromizing letter is to utilize the so-called "A application" method, in which a chromium powder and a suspending agent are applied as a coating material to the pin, and the coated pin is then dried and heated in an inert gas atmosphere or in a vacuum. The "powder pack" method, however is preferred because it is inexpensive, and especially suitable for treatment of small articles such as connecting pins for timing chains.

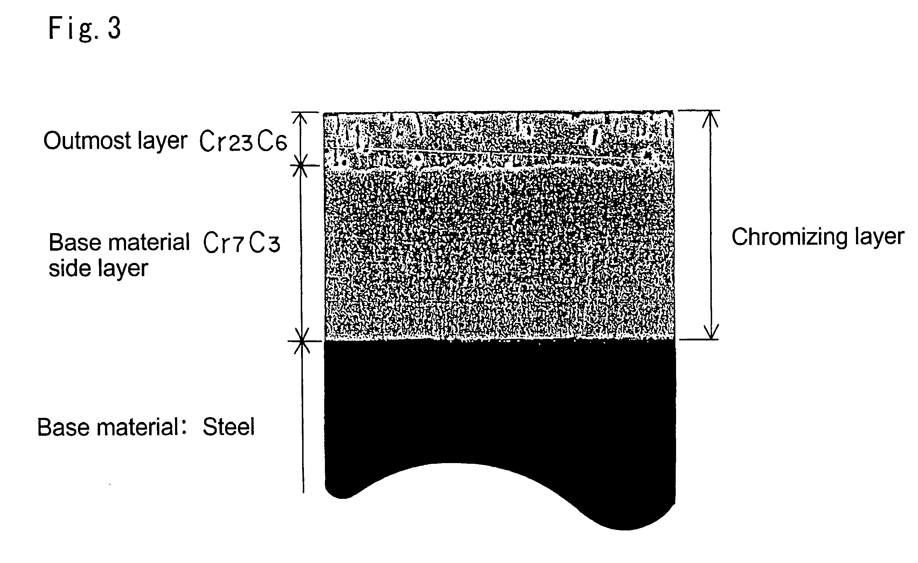

As the chromizing layer is formed on the high carbon surface layer of the pin by the diffusion penetration treatment, the treatment temperature is preferably set to about 1000°C. Carbon contained in the high carbon surface layer formed as a surface layer of the pin 15, or from the pin base material itself in the case of a pin formed of high carbon steel, penetrates by diffusion into the chromizing layer formed on the surface of the pin to combine with chromium in the chromizing layer. As can be seen from a cross-sectional photograph of FIG. 3, taken by an electron microscope, the chromizing layer is composed of two parts: an inner chromium carbide layer, formed on the steel base material, which becomes a Cr₇C₃ - containing layer, and an outermost chromium carbide layer, which becomes a Cr₂₃C₆ - containing layer. Cr₇C₃ is the main component of the inner chromium carbide layer, and Cr₂₃C₆ is the main component of the outer chromium carbide layer.

Based on measurements taken on microphotographs corresponding to the photograph in FIG. 3, the thickness of the inner, or base material-side, Cr₇C₃ - containing layer is in the range from 8 to 20 µm, and the thickness of the outermost, or Cr₂₃C₆- containing layer is in the range from 1 to 6 µm. The mechanism by which the chromizing layer of the surface becomes divided into two different sublayers is not fully understood at the present time. However, it appears that the chromium, which is supplied as a powder in the chromizing treatment, combines with carbon supplied from the high carbon pin, or from the high carbon surface layer of the pin, to form a Cr₇C₃ layer, i.e. a layer having a high carbon to chromium ratio in the vicinity of the base material, and a Cr₂₃C₆ layer, i.e., a layer having a lower carbon to chromium ratio, farther from the base material. It is believed that, in the process of formation of the solid phase chromium carbide, a balancing takes in which the chromium carbide becomes divided into the two different layers.

Wear elongation tests were made to determine the properties of the pin according to the invention under the following test conditions:
Chain: Roller chain having a pitch of 8 mm
Number of teeth on the sprockets: 18x36
Rotation speed: 6500 r/min
Lubricating oil: Deteriorated engine oil
Amount of oil: 1L/min
The tests were carried out using a testing apparatus and method generally used by the art. However, the same general results can be expected even if a different test method is used.

The chain of Example 1 is a chain according to the invention in which no treatment was applied to reduce the surface roughness of the pins. The surface roughness of the chain of Example 1 had a ten point mean roughness (Rz) value in the range of 0.4 to 0.8µm.

The chain of Example 2 is a chain which is the same as the chain of Example 1, except that a treatment was applied to reduce the surface roughness of the pins, while still leaving an outermost layer containing Cr₂₃C₆. In this case, the surface roughness of the outermost layer of the pin, i.e., the layer containing Cr₂₃C₆, was decreased by barrel polishing. And the Cr₂₃C₆ -containing outermost layer in example 2 was porous so that recesses are formed in the exposed surface of the layer. The recesses function as basins that maintain improved lubricity over a long period of time, so that the endurance of the roller chain is improved. In barrel polishing, friction between a pin and an abrasive material is generated, and polishing of small articles such as pins can be carried out efficiently. On the other hand, the ten point mean surface roughness (Rz) of the pin of Example 2 had a value in the range from 0.2 to 0.3µm.

In the conventional case, used for comparison, the pins were subjected to a full barrel polishing treatment, so that the outermost Cr₂₃C₆ layer was completely removed. Thus, the surface roughness of the pin of the conventional case was improved and was substantially the same as the surface roughness of the pin example 2.

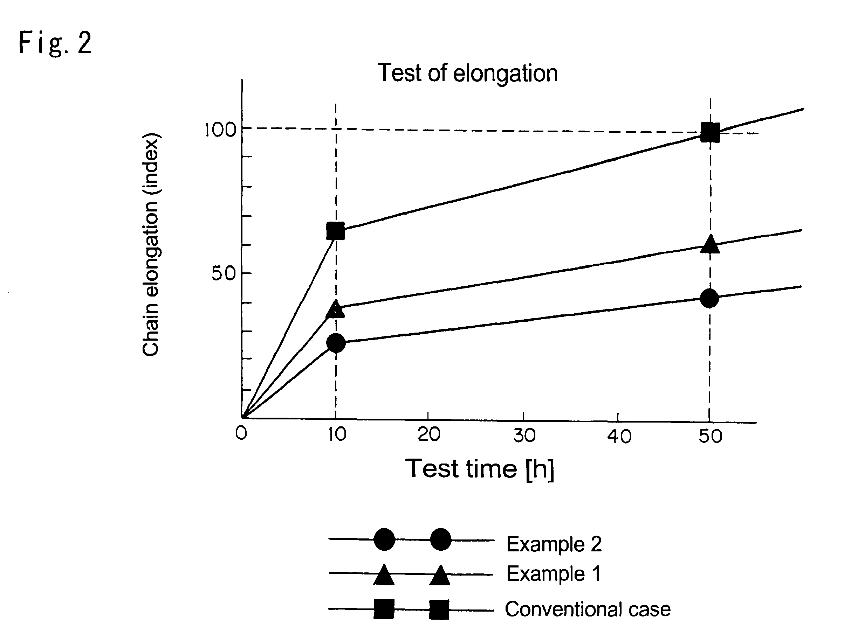

As shown by the results of the chain elongation tests, as depicted in FIG. 2, when the roller chain of Example 1 is compared with a conventional roller chain after a test time of 50 hours, the elongation of the chain of Example 1 was about 60% of the elongation of the conventional chain. The slopes of the curves depicting chain elongation become more gradual after 10 hours from the start of the test, indicating a higher rate initial wear in all three cases. However, it can be seen that the initial wear is less in Examples 1 and 2 than in the conventional case. The initial wear in Example 1, which has two chromium carbide layers on the surface of the pin, is lower than the initial wear in the conventional case, where the pin has only one chromium carbide layer. In example 2, elongation during the initial 10 hours of the test was still further reduced by virtue of the fact that the reduced surface roughness of the pin resulted in a reduction in wear due to the attackability of the bushing.

From the results of the tests, if the elongation of the conventional chain after 50 hours is set at 100, the elongation of the chain of Example 1 was about 60, and the elongation of the chain of Example 2 was about 40. Thus, a clear improvement was realized as a result of the reduction in the surface smoothness of the outermost chromium carbide (Cr₂₃C₆) layer. This improvement is due to suppression of the attackability of the bushing during the initial stage of the test, and also to reduction of abrasive loss of the bushing. Both results are achieved by reducing the surface roughness of the pin while still ensuring that the outermost layer, i.e. the layer containing Cr₂₃C₆ is present. The target thickness of the outermost layer of the pin of Example 2 is in the range from 1 to 6 µm.

When the barrel polishing treatment is fully carried out, so that the outermost layer is completely removed, the result corresponds to the conventional case, and the function of the outermost layer is lost, and as seen in FIG. 2, the elongation of the chain in the conventional case is greater than that of the chains of Examples 1 and 2, both at the 10 hour point and at the 50 hour point, due in part to wear of the bushing during the initial stage of the test.

It has also been found that the abrasive loss in the the pins of Examples 1 and 2 was only about 1/15 of the abrasive loss in the conventional case. Furthermore it was determined that the abrasive loss of the bushing in the case of Example 1 was improved to about 90% and the abrasive loss of the bushing in the case of Example 2, was improved to about 65%, as compared with the bushing in the conventional case.

### INDUSTRIAL APPLICABILITY

The invention has significant industrial applicability in that it reduces abnormal wear elongation of a chain for use in an automobile engine due to operation in deteriorated lubricating oil and the reduction in abnormal wear elongation can be achieved reproducibly and without the need for special production facilities or expensive materials.

## Claims

1. A power transmission chain (10) for use in an automobile engine comprising:
pairs of inner plates (11) and pairs of outer plates (14) in alternating, overlapping relationship along the length of the chain (10);
a pair of bushings (12) for each pair of inner plates (11), ends of the bushings (12) being press-fit into bushing holes (11a) in the inner plates (11);
a pair of pins (15) for each pair of outer plates (14), ends of the pins (15) being press-fit into pin holes (14a) in the outer plates (14), each pin (15) having an outer surface (15a), and extending through, and fitting loosely in, one of said bushings (12);
wherein the base material of each of the pins (15) is steel, and an outer portion of each pin (15), extending from the base material to an outer surface thereof, contains chromium carbide and is formed by diffusion penetration, and said outer portion is composed of an inner layer containing Cr₇C₃, and an outermost layer containing Cr₂₃C₆.

2. A power transmission chain (10) according to claim 1, in which said inner layer, containing Cr₇C₃ is thicker than said outermost layer containing Cr₂₃C₆.

3. A power transmission chain (10) according to claim 1, in which the outermost layer of each of said pins (15), containing Cr₂₃C₆, is subjected to treatment to reduce the surface roughness of the pin (15).

4. A power transmission chain (10) according to claim 3, in which said inner layer, containing Cr₇C₃ is thicker than said outermost layer containing Cr₂₃C₆.

5. A power transmission chain (10) according to claim 3, in which said treatment to reduce surface roughness is a barrel polishing treatment.

6. A power transmission chain (10) according to claim 5, in which said inner layer, containing Cr₇C₃ is thicker than said outermost layer containing Cr₂₃C₆.
